# EUROPÄISCHE PATENTSCHRIFT

(11) **EP 1 076 231 B1**
(45) Veröffentlichungstag und Bekanntmachung des Hinweises auf die Patenterteilung: **17.08.2016**
(21) Anmeldenummer: 00114139.9
(22) Anmeldetag: 10.07.2000
(51) Int. Cl.: G01M 1/20

(54) **Einrichtung und Verfahren zur Ermittlung der Unwucht**
Device and method for determining unbalance
Dispositif et méthode pour déterminer le deséquilibrage

(30) Priorität: 07.08.1999 DE 19937495
(43) Veröffentlichungstag der Anmeldung: 14.02.2001
(73) Patentinhaber: Schenck RoTec GmbH, 64293 Darmstadt (DE)
(72) Erfinder: Thelen, Dieter, Dr.-Ing., 64397 Modautal (DE); Stork, Michael, Dipl.-Ing., 64291 Darmstadt (DE)
(74) Vertreter: Haar, Lucas Heinz Jörn

(56) Entgegenhaltungen:
- DE-A- 2 942 379
- DE-B- 1 237 807
- GB-A- 1 388 047
- GB-A- 1 535 108
- US-A- 4 691 567
- US-A- 4 930 348
- US-A- 5 099 701
- US-A- 5 677 487
- US-A- 5 784 929

## Beschreibung

Die Erfindung bezieht sich auf eine Einrichtung zur Ermittlung der Unwucht eines von einer Aufnahme rotierbar gehaltenen Rotationskörpers mit einem rechtwinklig zur Rotationsachse angeordneten, die Aufnahme aufweisenden, plattenförmigen Dynamometerelement, das eine innere über Stege mit einem äußeren Rahmenteil verbundene Aufnahmeplatte umfaßt sowie zumindest einen zwischen Aufnahmeplatte und Rahmenteil angeordneten Schwingungsaufnehmer, der unwuchtinduzierte Schwingungen der Aufnahmeplatte gegenüber dem Rahmenteil erfaßt, wobei Stegpaare aus beiderseits der Aufnahme angeordneten Stegen vorgesehen sind, sowie auf ein Verfahren zur Ermittlung der Unwucht eines Rotationskörpers, der von einer Aufnahme einer Unwuchtermittlungseinrichtung rotierbar gehalten wird, mit einem die Aufnahme aufweisenden plattenförmigen Dynamometerelement, bei dem die unwuchtinduzierten Schwingungen von Dynamometerbereichen als Translationsschwingungen und Drehschwingungen getrennt erfaßbar sind.

Aus der DE-OS 28 47 295 ist eine Auswuchtmaschine bekannt, die ein plattenförmiges Dynamometerelement aufweist, das partiell federnd geschlitzt und mit Stegen versehen ist. Die innere Platte weist eine Aufnahme für den Rotationskörper auf, die als Auswuchtspindel ausgebildet ist. Die Aufnahmeplatte ist über beiderseits der Achse des Rotationskörpers in der Plattenebene angeordnete Stege mit dem äußeren Rahmenteil des Dynamometerelements verbunden. Die Aufnahmeplatte gibt die beim Umlauf des Rotationskörpers entstehenden Schwingungen an Schwingungsumformer weiter, von denen der eine nur die Schwenkbewegung der Aufnahmeplatte um eine Achse erfaßt, die dem Unwuchtanteil, der zufolge eines Unwuchtmoments entsteht, entspricht. Der zufolge einer Einzelkraft (statische Unwucht) entstehende Unwuchtanteil wird von einem weiteren Schwingungsumformer aufgenommen, dessen Meßrichtung parallel zur Plattenebene verläuft. Das Dynamometerelement ist gegen ein Fundament abgestützt. Zur Abstützung sind zwei biegeelastische Flachfedern sowie eine weitere biegeelastische Abstützung vorgesehen. Die Flachfedern zum Abfangen von Kräften in Richtung der Rotationsachse sind beiderseits der Achse des Rotationskörpers an der Aufnahmeplatte befestigt und erstrecken sich rechtwinklig von der Plattenoberfläche weg. Bei der bekannten Einrichtung sind gesonderte Elemente in Form von biegeelastischen Abstützungen zur Aufnahme von in axialer Richtung wirkenden Kräften, wie z. B. Axialschub- oder Gewichtskräften, vorgesehen, die die Schwingbewegungen der Aufnahmeplatte und damit die Genauigkeit der Unwuchtermittlung in unerwünschter weise beeinflussen können.

Aus US 4 930 348 A ist eine vertikale, hart gefederte Auswuchtmaschine mit einer an einem Maschinentisch befestigten Federungskartusche bekannt, die zwei in einem Abstand voneinander angeordnete Federplatten aufweist, die in Bohrungen das Spindelgehäuse einer Auswuchtspindel aufnehmen. Die Federplatten haben zu ihren Bohrungen konzentrische Schlitze, die durch zwei diametral angeordnete federnde Stege voneinander getrennt sind. Die federnden Stege der beiden Federplatten liegen in derselben, die Drehachse der Spindel enthaltenden Ebene. In jeweils einem der Schlitze jeder Federplatte ist ein Kraftsensor angeordnet, um Schwingungen in der Plattenebene zu messen. Bei dieser bekannten Anordnung enthalten die Schwingungssignale beider Kraftsensoren durch eine statische Unwucht und ein Unwuchtmoment induzierte Schwingungen.

Der Erfindung liegt daher die Aufgabe zugrunde, eine einfache und kostengünstige Einrichtung zur Ermittlung der Unwucht eines Rotationskörpers zu schaffen, die eine störeinflußfreie Unwuchtmessung und eine genaue Auswertung der Unwuchtanteile aufgrund von Unwuchtmoment und statischer Unwucht ermöglicht und die insbesondere die Genauigkeit bei der Ermittlung der statischen Unwucht verbessert.

Erfindungsgemäß wird diese Aufgabe durch die Merkmale des unabhängigen Patentanspruchs 1 gelöst. Bei der erfindungsgemäßen Einrichtung fängt das plattenförmige Dynamometerelement alle vom Rotationskörper ausgehenden Kräfte und Momente in sich ab, so daß gesonderte Abstützungen in vorteilhafter Weise entfallen können. Auf einfachste Weise erhält man durch Ausgestaltungen der Stegpaare sowohl für die Axialschub- oder Gewichtskraftabstützung als auch für die schwingfähige Abstützung eine Einrichtung mit besonders kompakter Bauform bzw. Bauhöhe die einen im Hinblick auf die Steifigkeitsverteilung und die Massenverteilung im wesentlichen symmetrischen Aufbau aufweist und die darüberhinaus eine besonders genaue Unwuchtermittlung aufgrund verbesserter Ebenentrennung sicherstellt. Das plattenförmige Dynamometerelement ist besonders kostengünstig z.B. als Blechteil durch Ausbrennen und Umformen oder als Gußteil herstellbar. Die erfindungsgemäße Bauform ermöglicht einen sehr geringen Abstand des Rotorschwerpunkts von der Bezugsebene des Dynamometerelements, d.h. letztendlich aufgrund verbesserter Ebenentrennung ein genaueres Ergebnis. Die Bestimmung der statischen Unwucht erfolgt sehr genau, da der Aufbau im wesentlichen symmetrisch ist und die Meßebene des Schwingungsaufnehmers in der Plattenebene des Dynamometerelements liegt. Die Ausgestaltung nach der Erfindung ist speziell für die Einebenenauswuchtung vorteilhaft.

Durch die Anordnung des ersten Stegpaares in der Plattenebene und in einer die Rotationsachse enthaltenden Ebene gemäß einer Ausgestaltung der Erfindung ist die Schwenkachse für die Drehschwingungen des Dynamometerelements optimal positioniert. Die durch dieses Stegpaar gebildete Schwenkachse liegt in der Plattenebene, so daß keine störenden Kräfte oder Momente das Meßergebnis beeinflussen können. Dieses Stegpaar übernimmt durch seine biegesteife Ausgestaltung auf einfachste Weise die Abstützung nicht unwuchtinduzierter Kräfte wie z.B. der Gewichtskraft oder der Kräfte, die z.B. in Achsrichtung des Rotationskörpers aufgrund der Ausgestaltung des Rotors mit Axialkraft erzeugenden Elementen, z.B. Rotorschaufeln, entstehen. Die Stege dieses Stegpaares weisen hierzu ein hohes Flächenträgheitsmoment um die Querachse auf, was z.B. bei einem Rechteckprofil oder bei zwei, einen Steg bildenden, beabstandeten Stäben der Fall ist.

Ordnet man in weiterer Ausgestaltung der Erfindung beiderseits des die Schwenkachse bildenden Stegpaares zwei weitere parallel laufende Stegpaare an, so ergibt sich eine sowohl hinsichtlich der Auslegung als auch hinsichtlich der Herstellung, der Kalibrierung und der Meßgenauigkeit besonders vorteilhafte symmetrische Ausführungsform. Dieses gilt auch für eine Weiterbildung der Erfindung, bei der die Aufnahmeplatte rechteckförmig ausgebildet ist und die Stegpaare an den Enden sowie in der Mitte der längeren Rechteckseite angeordnet sind.

Die Ausgestaltung nach den Merkmalen des Patentanspruchs 12 ergibt ein sehr kompaktes, genau messendes Dynamometerelement.

Die Erfindung läßt auf einfachste Weise die Anordnung der Plattenebene des Dynamometerelements sowohl in horizontaler als auch in vertikaler Richtung zu, so daß speziellen Bedürfnissen angepaßte Auswuchtmaschinen mit vertikaler oder horizontaler Rotationsachse sich sehr einfach verwirklichen lassen.

Wird die Rotationsachse in Ausgestaltung der Erfindung in vertikaler Richtung angeordnet und verläuft die Plattenebene damit in der Horizontalen, erhält man in vorteilhafter Weise die Möglichkeit, den von gesonderten Abstützelementen freien Raum unterhalb des Dynamometerelements für weitere Elemente einer Auswuchtmaschine bzw. einer Unwuchtmeßmaschine z.B. für Antriebs- und Steuerungseinrichtungen oder auch für Spanneinrichtungen für die Befestigung des Rotationskörpers auf z.B. einer Wuchtspindel oder den Aufnahmeflächen zu nutzen, was insgesamt zu einem kompakten und servicefreundlichen Aufbau führt.

Weitere vorteilhafte Ausführungsformen ergeben sich aus den Unteransprüchen und aus der nachfolgenden Beschreibung.

Die Erfindung wird nachstehend mit Bezug auf die Zeichnung näher erläutert. Es zeigen:
- Fig. 1: das Dynamometerelement in perspektivischer Darstellung,
- Fig. 2: eine Schnittdarstellung längs der Linie II-II
- Fig. 3: eine Schnittdarstellung längs der Linie III-III
- Fig. 4: einen Steg in Draufsicht
- Fig. 5: eine Prinzipdarstellung der erfindungsgemäßen Einrichtung

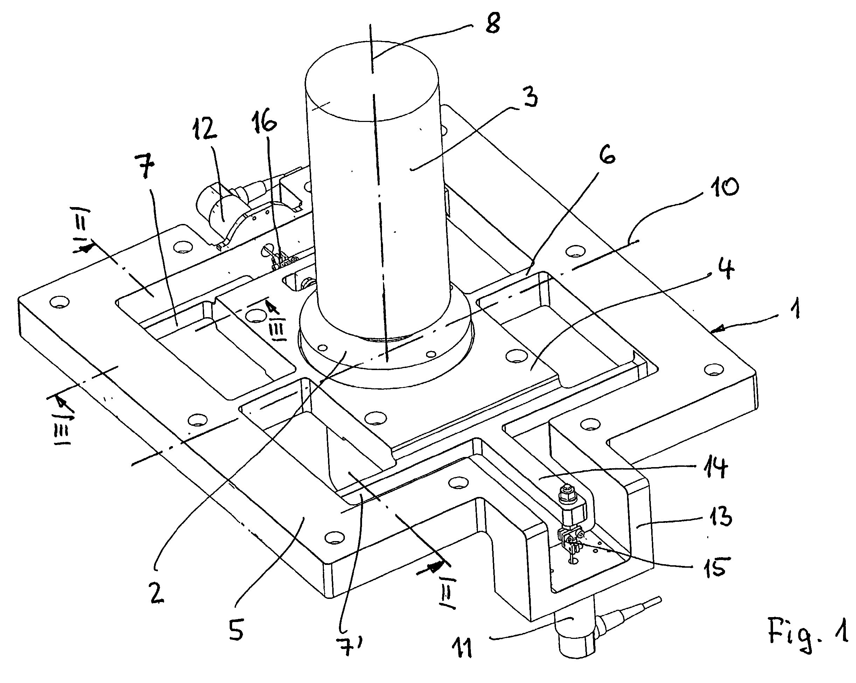

Nach Fig. 1 weist das Dynamometerelement 1 einer nicht näher dargestellten Auswuchtmaschine eine innere mit einer Aufnahme 2 für einen Rotationskörper 3 versehene Aufnahmeplatte 4 und ein äußeres Rahmenteil 5 auf, die über Stegpaare 6 und 7, 7' miteinander verbunden sind. Unter Dynamometer versteht man in der Auswuchttechnik ein federndes Abstütz-und Meßsystem. Die Aufnahme 2 ist in einer Bohrung der Aufnahmeplatte 4 befestigt und kann beispielsweise auch eine Wuchtspindel aufweisen, auf die ein auszuwuchtender Rotationskörper 3 montiert werden kann. Im dargestellten Beispiel weist die Aufnahme 2 Aufnahmeflächen auf, auf denen der Rotationskörper 3 befestigt wird. Die Aufnahme 2 wird in üblicher Weise angetrieben, beispielsweise über einen Riemenantrieb oder einen angeflanschten Motor. Das Dynamometerelement 1 ist mit dem äußeren Rahmenteil 5 in der Auswuchtmaschine befestigt und weist zwei Schwingungsaufnehmer 11, 12 auf, deren Signale einer Unwuchtmeßeinrichtung zur Bestimmung des Unwuchtausgleichs in zwei Ausgleichsebenen nach Größe und, unter Heranziehung der Signale eines nicht dargestellten Bezugwinkelgebers, auch nach Winkellage zugeleitet werden. Die Schwingungsaufnehmer können beispielsweise elektrodynamische Geschwindigkeitsaufnehmer oder auch Piezoaufnehmer sein.

Die unwuchtinduzierten Schwingungen der Aufnahmeplatte 4 werden in translatorische Schwingungen und Drehschwingungen umgewandelt. Die Umwandlung erfolgt dadurch, daß die Rotationsachse 8 des Rotationskörpers 3, die rechtwinklig zur Plattenebene der Aufnahmeplatte 4 verläuft, um eine in der Mittelebene des plattenförmigen Dynamometerelements 1 liegende Schwenkachse 10 drehbar bzw. schwenkbar ist. Die Schwenkachse 10 durchdringt die Rotationsachse 8 rechtwinklig und ist im dargestellten Beispiel rechtwinklig zu der Richtung, in der die unwuchtinduzierten Translationsschwingungen erfaßt werden, angeordnet. Es ist jedoch auch möglich, die Richtung zur Erfassung der Translationsschwingungen z.B. in Richtung der Schwenkachse 10 anzuordnen. Die unwuchtinduzierten Drehschwingungen um die Schwenkachse 10 resultieren aus dem Unwuchtmoment des zu untersuchenden Rotationskörpers. Unwuchtinduzierte translatorische Schwingungen der Aufnahmeplatte 4 werden durch die statische Unwucht des Rotationskörpers 3 hervorgerufen und erfolgen in einer senkrecht zur Rotationsachse 8 liegenden Ebene. Bei der Einebenenauswuchtung wird lediglich das Signal des die translatorischen Schwingungen erfassenden Schwingungsaufnehmers 12 benötigt; so daß der die Drehschwingungen erfassende Schwingungsaufnehmer 11 bei Einebenenmaschinen entfallen kann.

Die Anordnung und Auslegung der Stegpaare 6 und 7, 7' stellt das im wesentlichen unbeeinflußte unwuchtinduzierte Translations- und Drehverhalten der Aufnahmeplatte 4 in Bezug auf das äußere Rahmenteil 5 sicher. Hierzu ist ein Stegpaar 6 in der Schwenkachse 10 für die Drehbewegung der Aufnahmeplatte 4 angeordnet und äquidistant hierzu sind zwei Stegpaare 7, 7' an den Enden der Längsseite der im Beispiel in der Draufsicht rechteckförmigen Aufnahmeplatte 4 angeordnet und erstrecken sich in Richtung der Erstreckung des ersten Stegpaares 6. Durch die Anordnung des Stegpaares 6 in der Schwenkachse 10 wird die unwuchtinduzierte Drehbewegung der Aufnahmeplatte 4 praktisch nicht beeinflußt, da kein Störmoment entstehen kann. Die Anordnung des zweiten Stegpaares 7, 7' stellt zusammen mit der des ersten Stegpaares 6 eine Parallellenkeranordnung für Schwingungen der Aufnahmeplatte 4 in einer senkrecht zur Schwenkachse 10 liegenden Richtung dar. Die beiden äußeren Stegpaare 7, 7' sind biegeweich sowohl in Bezug auf Biegungen aus der Plattenebene heraus aufgrund der Drehschwingungen der Aufnahmeplatte 4 als auch in Bezug auf Biegungen aufgrund ihrer Parallellenkerfunktion. Das in der Schwenkachse 10 verlaufende Stegpaar 6 ist biegeweich im Hinblick auf seine Parallellenkerfunktion, aber biegesteif in Bezug auf Biegungen aus der Plattenebene heraus; diese Biegesteifigkeit ermöglicht die Abtragung aller, d.h. auch der nicht unwuchtinduzierten Kräfte wie rotorbedingte Axialkräfte oder Gewichtskräfte im Dynamometerelement 1 selbst, ohne daß zusätzliche Abstützelemente erforderlich sind.

Zur Erfassung der Drehschwingungen der Aufnahmeplatte 4 um die Schwenkachse 10 ist ein Schwingungsaufnehmer 11 vorgesehen, der im Beispiel als Tauchspulenaufnehmer ausgebildet ist und dessen Meßachse parallel zur Rotationsachse 8 des Rotationskörpers 3 verläuft. Der Schwingungsaufnehmer 11 ist im dargestellten Beispiel an einem am äußeren Rahmenteil 5 vertieft angeformten Fortsatz 13 befestigt. In dieser Vertiefung ist ein an der Aufnahmeplatte 4 angeformter Plattenfortsatz 14 bewegbar und überträgt über eine biegeelastische Koppelstange 15 die unwuchtinduzierten Drehschwingungen auf den Schwingungsaufnehmer 11. Es kann jedoch auch eine Anordnung mit einem Versatz im Plattenfortsatz und im ansonsten eben verlaufenden Rahmenteil vorgesehen werden oder beide Teile können einen Versatz in Vertikalrichtung aufweisen.

Die Meßachse des zur Erfassung der translatorischen Schwingungen vorgesehenen Schwingungsaufnehmers 12 liegt rechtwinklig zu den Stegachsen und der Rotationsachse 8 des Rotationskörpers 3 und in der Mittelebene des plattenförmigen Dynamometers 1. Der Schwingungsaufnehmer 12 ist in dem dargestellten Ausführungsbeispiel in einer Vertiefung am äußeren Rahmenumfang angeordnet und steht über eine biegeelastische Koppelstange 16 mit der Schmalseite der Aufnahmeplatte 4 in Verbindung.

Nicht näher dargestellt ist eine Ausführungsform, bei der die Achse zumindest eines der beiden Schwingungsaufnehmer 11, 12 parallelverschoben werden kann und der Aufnehmer dann befestigt wird. Bei dem Schwingungsaufnehmer 12 läßt sich dies durch Verschieben des Aufnehmers mit seiner Flanschfläche auf der zugeordneten Rahmenfläche am Boden der Vertiefung am äußeren Rahmenumfang bewerkstelligen. Es lassen sich so eventuelle Phasenfehler der beiden Aufnehmersignale beispielsweise aufgrund von Werkstoffanisotropien oder Herstellungsunsymmetrien auf einfache Weise mechanisch beseitigen.

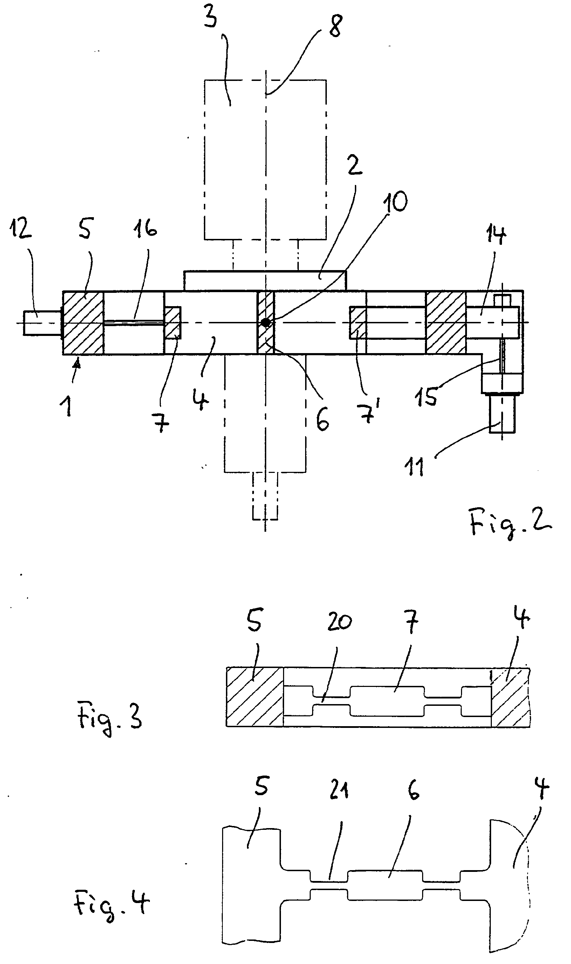

Auch die Verwendung von Piezoaufnehmern, die unmittelbar zwischen der Aufnahmeplatte und dem Rahmenteil angeordnet werden, kann vorgesehen werden und liefert geometrisch betrachtet einen höheren Symmetriegrad der Einrichtung. Ferner kann man Aufnehmer zur Erfassung der Schwenkbewegungen beiderseits der Schwenkachse anordnen, was den Symmetriegrad weiter verbessert. Als Einstellmöglichkeit für die Drehsteifigkeit des Dynamometerelements 1 sind, wie aus Fig. 3 ersichtlich, Gelenke bildende Ausnehmungen 20 in den äußeren Stegpaaren 7, 7' vorgesehen, die die Biegesteifigkeit der Stege dieser Stegpaare 7, 7' und damit letztlich die Schwenkbarkeit der Aufnahmeplatte 4 beeinflussen. Ähnliche Ausnehmungen 21 in den um 90° versetzten Flächen können als Einstellmöglichkeit für die Bewegbarkeit der Aufnahmeplatte 4 in Hinsicht auf translatorische Schwingungen dienen. In Fig. 4 ist dies exemplarisch für das die Schwenkachse bildende Stegpaar 6 angedeutet.

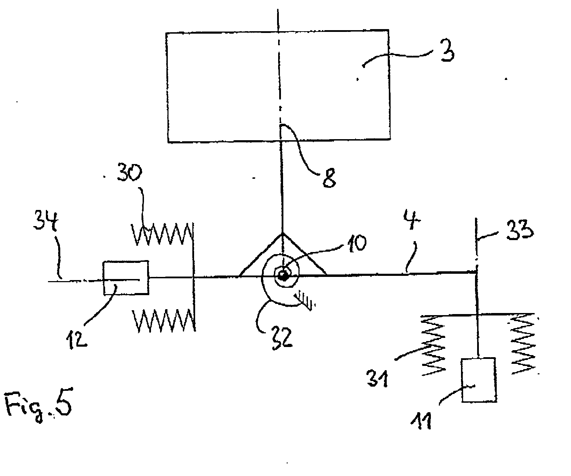

Wie aus der Fig. 5 mit dem prinzipiellen Aufbau einer Einrichtung zur Ermittlung der Unwucht mit vertikaler Rotationsachse 8 ersichtlich ist, ist der Rotationskörper 3 mit seiner Rotationsachse 8 um die horizontal verlaufende Schwenkachse 10 drehbar gelagert; die Rotationsachse 8 und die Aufnahmeplatte 4 lassen sich durch einen Winkelhebel mit senkrecht zueinander angeordneten Hebelarmen veranschaulichen. Das Dynamometersystem weist eine durch das Federsymbol 30 angedeutete horizontale Steifigkeit, eine durch das Federsymbol 31 angedeutete vertikale Steifigkeit und eine durch das Drehfedersymbol 32 angeordnete Drehsteifigkeit auf. Die strichpunktierte Linie 33 zeigt die Wirkebene des Schwingungsaufnehmers 11 für die vertikale Richtung, die strichpunktierte Linie 34 die Wirkebene des Schwingungsaufnehmers 12 für die horizontale Richtung.

Bei einer Einebenenmessung, also der Ermittlung einer statischen Unwucht, mißt der horizontale Schwingungsaufnehmer 12 den Schwingweg in horizontaler Richtung aufgrund der statischen Unwucht. Die Schwenkachse 10 bleibt dabei in der Wirkebene 34 des horizontalen Schwingungsaufnehmers 12, d.h. in der Mittelebene des plattenförmigen Dynamometers.

Bei einer Zweiebenenmessung, also der Ermittlung einer dynamischen Unwucht, die als Überlagerung einer statischen Unwucht und einer Momentenunwucht betrachtet werden kann, mißt der horizontale Schwingungsaufnehmer 12 den Schwingweg in horizontaler Richtung aufgrund der statischen Unwucht, während der vertikale Schwingungsaufnehmer den durch die Schwenkbewegung der Winkelhebelanordnung 8, 4 aufgrund der Momentenunwucht sich ergebenden Schwingweg in vertikaler Richtung mißt. Die Schwenkachse 10 bleibt dabei in der Wirkebene 34 des horizontalen Schwingungsaufnehmers 12.

Bei einem von Störeinflüssen z.B. aufgrund zusätzlicher Abstützungen beeinflußten System, das im Vergleich zum erfindungsgemäßen System nur einen geringen Symmetriegrad im Hinblick auf die Massenverteilung und die Steifigkeitsverteilung aufweist, liegt die Schwenkachse 10 dieses Systems nicht mehr in der Wirkebene des horizontalen Schwingungsaufnehmers 12, sondern außerhalb, was zur Messung von z.B. zu großen Schwingwegen führt.

Mit der Erfindung ist erstmals sichergestellt, daß die Schwenkachse d.h. die Bezugsebene des plattenförmigen Dynamometerelements 1 in der Wirkebene 34 des horizontalen Schwingungsaufnehmers 12 bleibt, so daß eine ideale Trennung der von einer dynamischen Unwucht induzierten Schwenkbewegungen und damit eine genaue Unwuchtermittlung der statischen Unwucht erfolgt.

## Patentansprüche

1. Unwuchtmesseinrichtung zur Ermittlung der Unwucht eines Rotationskörpers (3) mit einem rechtwinklig zu dessen Rotationsachse (8) angeordneten, plattenförmigen Dynamometerelement (1), das eine den Rotationskörper (3) um die Rotationsachse (8) rotierbar haltende und in üblicher Weise durch einen Motor antreibbare Aufnahme (2) aufweist und das eine innere, über Stege mit einem äußeren Rahmenteil (5) verbundene Aufnahmeplatte (4) umfasst, sowie zumindest zwei zwischen Aufnahmeplatte (4) und Rahmenteil (5) angeordneten Schwingungsaufnehmern (11, 12), die unwuchtinduzierte Schwingungen der Aufnahmeplatte (4) gegenüber dem Rahmenteil (5) erfassen, wobei ein erster der Schwingungsaufnehmer (11, 12) in der Plattenebene angeordnet ist und Schwingungen in der Plattenebene erfasst, wobei beiderseits der Aufnahmeplatte (4) Stegpaare (6, 7, 7') angeordnet sind und zur Abstützung von nicht unwuchtinduzierten Kräften der Aufnahmeplatte (4) und zur schwingfähigen Abstützung der Aufnahmeplatte (4) ausgebildet sind und wobei ein erstes Stegpaar (6) in einer die Rotationsachse (8) enthaltenden Ebene und in der Plattenebene verläuft, dadurch gekennzeichziet, daß das erste Stegpaar (6) eine rechtwinklig zur Rotationsachse (8) angeordnete Schwenkachse (10) für eine Drehbewegung der Aufnahmeplatte (4) bildet und zur Abstützung der nicht unwuchtinduzierten Kräfte ein in Bezug auf Biegungen aus der Plattenebene biegesteifes und in Richtung der Plattenebene biegeweiches Profil aufweist und daß äquidistant beiderseits des ersten Stegpaares (6) in der Plattenebene verlaufende und sich in Richtung der Erstreckung des ersten Stegpaares (6) erstreckende zweite Stegpaare (7, 7') angeordnet sind, die ein in Bezug auf Biegungen aus der Plattenebene und in Richtung der Plattenebene biegeweiches Profil aufweisen und daß ein zweiter der Schwingungsaufnehmer (11, 12) im wesentlichen rechtwinklig zu der Plattenebene die unwuchtinduzierten Schwingungen der Aufnahmeplatte (4) gegenüber dem Rahmenteil (5) erfasst.

2. Einrichtung nach Anspruch 1, daß das biegesteife Profil des die Schwenkachse (10) bildenden ersten Stegpaares (6) ein rechteckförmiges Profil ist, dessen längere Rechteckseite senkrecht zur Plattenebene verläuft.

3. Einrichtung nach Anspruch 1, **dadurch gekennzeichnet, daß** die parallel verlaufenden zweiten Stegpaare (7, 7') ein biegeweiches quadratisches, vieleckförmiges oder kreisförmiges Profil aufweisen.

4. Einrichtung nach einem oder mehreren der vorhergehenden Ansprüche, **dadurch gekennzeichnet, daß** die Aufnahmeplatte (4) rechteckförmig ausgebildet ist und die ersten Stegpaare (6) in der Mitte und die zweiten Stegpaare (, 7, 7') an den Enden der längeren Rechteckseite angeordnet sind.

5. Einrichtung nach einem oder mehreren der vorhergehenden Ansprüche, **dadurch gekennzeichnet, daß** die parallel verlaufenden zweiten Stegpaare (7, 7') Ausnehmungen (20) zur Verbesserung ihrer Biegbarkeit senkrecht zur Plattenebene aufweisen.

6. Einrichtung nach einem oder mehreren der vorhergehenden Ansprüche, **dadurch gekennzeichnet, daß** eines oder mehrere der ersten oder zweiten Stegpaare (6, 7, 7') Ausnehmungen (21) zur Verbesserung der Biegbarkeit in der Plattenebene aufweisen.

7. Einrichtung nach einem oder mehreren der vorhergehenden Ansprüche, **dadurch gekennzeichnet, daß** ein die Schwenkbewegung (10) erfassender Schwingungsaufnehmer (11) am Ende einer Verlängerung der Aufnahmeplatte (4) in einer Ausformung des Rahmenteils (5) abgestützt ist.

8. Einrichtung nach einem oder mehreren der vorhergehenden Ansprüche, **dadurch gekennzeichnet, daß** zumindest ein Schwingungsaufnehmer (11, 12) parallel zu seiner Achse verschoben befestigbar ist.

9. Einrichtung nach einem oder mehreren der vorhergehenden Ansprüche, **dadurch gekennzeichnet, daß** äquidistant beiderseits der Schwenkachse (10) die Schwenkbewegung erfassende Schwingungsaufnehmer in Form von Piezoelementen angeordnet sind.

10. Einrichtung nach einem oder mehreren der vorhergehenden Ansprüche, **dadurch gekennzeichnet, daß** zur Ankopplung der Schwingungsaufnehmer (11, 12) elastische, vorzugsweise biegeelastische Koppelelemente (15, 16, 16') zwischen Aufnahmeplatte (4) und Schwingungsaufnehmer (11, 12) vorgesehen sind.

11. Einrichtung nach einem oder mehreren der vorhergehenden Ansprüche, **dadurch gekennzeichnet, daß** die Rotationsachse (8) des Rotationskörpers (3) in vertikaler Richtung verläuft.

## Claims

1. An unbalance measuring device for determining the unbalance of a rotary body (3), with a plate-shaped dynamometer element (1) arranged at right angles to said body's axis of rotation (8) and including a mounting fixture (2) which supports the rotary body (3) to enable rotation about its axis of rotation (8) and is adapted to be driven in conventional manner by a motor, and comprising an inner mounting plate (4) connected to an outer frame member (5) by means of web members, as well as at least two vibration sensors (11, 12) arranged between the mounting plate (4) and the frame member (5) for detecting any unbalance-induced vibrations of the mounting plate (4) relative to the frame member (5), with a first one of said vibrations sensors (11, 12) being arranged in the plane of the plate to detect vibrations in the plane of the plate, there being arranged on either side of the mounting plate (4) web pairs (6, 7, 7') constructed to support non-unbalance-induced forces of the mounting plate (4) and to support the mounting plate (4) in a manner enabling it to vibrate, and wherein a first pair of webs (6) extends in a plane containing the axis of rotation (8) and in the plane of the plate, **characterized in that** the first web pair (6) defines a pivot axis (10) arranged at right angles to the axis of ro tation (8) for a rotary motion of the mounting plate (4) and exhibits, for supporting the non-unbalance-induced forces, a profile that is flexurally stiff relative to flexure out of the plane of the plate and flexurally soft in the direction of the plane of the plate, and that second web pairs (7, 7') arranged equidistantly on either side of the first web pair (6) extend in the plane of the plate and in the direction of extension of the first web pair (6), said second web pairs exhibiting a profile that is flexurally soft relative to flexure out of the plane of the plate and in the direction of the plane of the plate, and that a second one of the vibration sensors (11, 12) detects the unbalance-induced vibrations of the mounting plate (4) relative to the frame member (5) essentially at right angles to the plane of the plate.

2. The device according to claim 1, **characterized in that** the flexurally stiff profile of the first web pair (6) defining the pivot axis (10) is a rectangular profile, with the long side of the rectangle extending perpendicularly to the plane of the plate.

3. The device according to claim 1, **characterized in that** the second web pairs (7, 7') extending parallel to each other have a flexurally soft profile shaped in a square, polygonal or circular configuration.

4. The device according to one or several ones of the preceding claims, **characterized in that** the mounting plate (4) is of a rectangular configuration and the first web pairs (6) are arranged in the center and the second web pairs (7, 7') at the ends of the long side of the rectangle.

5. The device according to one or several ones of the preceding claims, **characterized in that** the parallel extending second web pairs (7, 7') include recesses (20) to improve their flexural property in a direction perpendicular to the plane of the plate.

6. The device according to one or several ones of the preceding claims, **characterized in that** one or several ones of the first or second web pairs (6, 7, 7') include recesses (21) to improve their flexural property in the plane of the plate.

7. The device according to one or several ones of the preceding claims, **characterized in that** a vibration sensor (11) detecting the pivotal motion (10) is supported in a socket of the frame member (5) at the end of an extension of the frame member (5).

8. The device according to one or several ones of the preceding claims, **characterized in that** at least one vibration sensor (11, 12) is attachable in a manner displaced parallel to its axis.

9. The device according to one or several ones of the preceding claims, **characterized in that** vibration sensors detecting the pivotal motion are arranged in the form of piezo elements equidistantly on either side of the pivot axis (10).

10. The device according to one or several ones of the preceding claims, **characterized in that**, for coupling the vibration sensors (11, 12), elastic, preferably flexurally elastic coupling elements (15, 16, 16') are provided between the mounting plate (4) and the vibration sensors (11, 12).

11. The device according to one or several ones of the preceding claims, **characterized in that** the axis of rotation (8) of the rotary body (3) extends in a vertical direction.

## Revendications

1. Système de mesure de déséquilibre permettant de déterminer le déséquilibre d'un corps rotatif (3), comprenant un élément dynamomètre (1) en forme de plaque, agencé perpendiculairement à l'axe de rotation (8) dudit corps rotatif, ledit élément dynamomètre comportant un logement (2) maintenant le corps rotatif (3) de manière à ce qu'il puisse tourner autour de l'axe de rotation (8) et pouvant être entraîné d'une manière habituelle par un moteur, ledit élément comportant une plaque réceptrice intérieure (4) reliée à une partie cadre extérieure (5) par l'intermédiaire d'éléments de liaison, ainsi qu'au moins deux capteurs d'oscillation (11, 12) agencés entre la plaque réceptrice (4) et la partie cadre (5), lesquels détectent des oscillations de la plaque réceptrice (4) par rapport à la partie cadre (5) induites par un déséquilibre, un premier des capteurs d'oscillation (11, 12) étant agencé dans le plan de la plaque et détectant des oscillations dans le plan de la plaque, des paires d'éléments de liaison (6, 7, 7') étant agencées de part et d'autre de la plaque réceptrice (4) et étant conçues pour supporter des forces de la plaque réceptrice (4) non induites par un déséquilibre et pour supporter de manière oscillante la plaque réceptrice (4), et une première paire d'éléments de liaison (6) s'étendant dans un plan contenant l'axe de rotation (8) et dans le plan de la plaque, **caractérisé en ce que** la première paire d'éléments de liaison (6) forme un axe de pivotement (10) pour un mouvement rotatif de la plaque réceptrice (4) agencé perpendiculairement à l'axe de rotation (8) et comprend, pour supporter les forces non induites par un déséquilibre, un profilé rigide en flexion par rapport aux flexions sortant du plan de la plaque et souple en flexion en direction du plan de la plaque, et **en ce que** des deuxièmes paires d'éléments de liaison (7, 7'), qui s'étendent dans le plan de la plaque à équidistance de part et d'autre de la première paire d'élément de liaison (6) et qui s'étendent en direction de l'extension de la première paire d'éléments de liaison (6) et qui comprennent un profilé souple en flexion par rapport aux flexions sortant du plan de la plaque et en direction du plan de la plaque, et **en ce qu'**un deuxième des capteurs d'oscillation (11, 12) détecte sensiblement perpendiculairement au plan de la plaque les oscillations de la plaque réceptrice (4) par rapport à la partie cadre (5) induites par un déséquilibre.

2. Dispositif selon la revendication 1, **caractérisé en ce que** le profilé rigide en flexion de la première paire d'éléments de liaison (6) formant l'axe de pivotement (10) est un profilé rectangulaire dont le côté plus long du rectangle s'étend perpendiculairement au plan de la plaque.

3. Dispositif selon la revendication 1, **caractérisé en ce que** les deuxièmes paires d'éléments de liaison (7, 7') s'étendant parallèlement présentent un profilé souple en flexion carré, polygonal ou circulaire.

4. Dispositif selon l'une ou plusieurs des revendications précédentes, **caractérisé en ce que** la plaque réceptrice (4) est de forme rectangulaire et les premières paires d'éléments de liaison (6) sont agencées au centre et les deuxièmes paires d'éléments de liaison (7, 7') sont agencées aux extrémités du côté plus long du rectangle.

5. Dispositif selon l'une ou plusieurs des revendications précédentes, **caractérisé en ce que** les deuxièmes paires d'éléments de liaison (7, 7') s'étendant parallèlement présentent des évidements (20) permettant d'améliorer leur flexibilité perpendiculairement au plan de la plaque.

6. Dispositif selon l'une ou plusieurs des revendications précédentes, **caractérisé en ce qu'une** ou plusieurs des premières ou deuxièmes paires d'éléments de liaison (6, 7, 7') présentent des évidements (21) permettant d'améliorer la flexibilité dans le plan de la plaque.

7. Dispositif selon l'une ou plusieurs des revendications précédentes, **caractérisé en ce qu'un** capteur d'oscillations (11) détectant le mouvement pivotant (10) est en appui à l'extrémité d'un prolongement de la plaque réceptrice (4) dans une avancée de la partie cadre (5).

8. Dispositif selon l'une ou plusieurs des revendications précédentes, **caractérisé en ce qu'au** moins un capteur d'oscillations (11, 12) peut être fixé mobile parallèlement à son axe.

9. Dispositif selon l'une ou plusieurs des revendications précédentes, **caractérisé en ce que** les capteurs d'oscillations détectant le mouvement de pivotement, réalisés sous la forme d'éléments piézoélectriques, sont disposés de manière équidistante de part et d'autre de l'axe de pivotement (10).

10. Dispositif selon l'une ou plusieurs des revendications précédentes, **caractérisé en ce que** des éléments d'accouplement (15, 16, 16') élastiques, de préférence élastiques en flexion, sont prévus entre la plaque réceptrice (4) et les capteurs d'oscillation (11, 12) pour le couplage des capteurs d'oscillation (11, 12).

11. Dispositif selon l'une ou plusieurs des revendications précédentes, **caractérisé en ce que** l'axe de rotation (8) du corps rotatif (3) s'étend dans la direction verticale.
